# FASCICULE DE BREVET EUROPEEN

(11) **EP 0 392 917 B1**
(45) Date de publication et mention de la délivrance du brevet: **29.06.1994**
(21) Numéro de dépôt: 90400976.8
(22) Date de dépôt: 10.04.1990
(51) Int. Cl.: H04N 1/18, H04N 1/028

(54) **Dispositif optique d'analyse de documents**
Optische Anordnung zur Analyse von Dokumenten
Optical device for analysing documents

(30) Priorité: 13.04.1989 FR 8904894
(43) Date de publication de la demande: 17.10.1990
(73) Titulaire: SOCIETE D'APPLICATIONS GENERALES D'ELECTRICITE ET DE MECANIQUE SAGEM, F-75783 Paris Cédex 16 (FR)
(72) Inventeur: Kuhn, Alex, F-95430 Auvers-Sur-Oise (FR)
(74) Mandataire: Bloch, Gérard

(56) Documents cités:
- EP-A- 0 153 002
- US-A- 4 464 681
- PATENT ABSTRACTS OF JAPAN, vol. 6, no. 259 (E-149)[1137], 17 décember 1982, page 63 E 149; & JP-A-57 155 876

## Description

La présente invention a pour objet un dispositif optique d'analyse de documents.

Un tel dispositif est notamment utilisé dans les appareils de télécopie. Dans ces appareils, le document à transmettre est éclairé et analysé ligne par ligne, à la manière d'une image vidéo. Les variations d'intensité du rayonnement lumineux rétrodiffusé par le document sont transformées en un signal électrique qui, après un codage approprié, est transmis sur le réseau téléphonique, par exemple, pour la restitution à distance du document d'origine.

En principe, l'analyse est réalisée en déplaçant le document pas à pas devant un dispositif optique qui analyse une ligne à la fois, chaque pas de déplacement étant d'une amplitude égale à la hauteur d'une ligne d'analyse. La transformation du rayonnement lumineux en signal électrique est effectuée dans une barrette d'éléments photosensibles, en nombre avantageusement égal au nombre de points d'analyse dans une ligne. A l'heure actuelle, ce nombre de points est de 1728 pour un document du format A4, c'est à dire large de 210 millimètres. Ainsi aucun déplacement mécanique n'est nécessaire pour analyser une ligne, le balayage de la barrette étant fait de manière électronique.

Il est donc nécessaire de focaliser le rayonnement rétrodiffusé sur la barrette d'éléments photosensibles, disposée parallèlement aux lignes analysées, mais dont la longueur est notablement plus faible que 210 millimètres. A cet effet, un objectif est disposé devant la barrette d'éléments photosensibles, et un ou plusieurs miroirs sont disposés entre l'objectif et le document, afin que le chemin optique entre les deux soit suffisamment long pour éviter un objectif trop coûteux, tout en procurant un encombrement mécanique réduit.

On connaît déjà, par exemple par la demande EP-A-0 153 002, des dispositifs d'analyse dans lesquels les composants optiques qui viennent d'être décrits sont disposés sur un support réalisé sous forme d'une unique pièce de fonderie sur laquelle sont donc fixés le ou les miroirs, l'objectif, et la barrette d'éléments photosensibles. Ces dispositifs ont pour inconvénient le fait qu'il ne peuvent s'accommoder d'un changement de largeur d'analyse, de longueur du chemin optique, de type d'objectif ou de barrette d'éléments photosensibles. Ainsi tout changement d'un de ces éléments implique la réalisation d'un nouveau support, donc la fabrication et la mise au point des moules et de l'outillage correspondant.

On connait également, par le brevet US-A-4 464 681, un dispositif comprenant un support réalisé en deux parties reliées entre elles par un système complexe et coûteux pour régler continument leur position relative.

La présente invention vise à pallier ces inconvénients en procurant un dispositif qui permet des changements dans la largeur d'analyse et la longueur du trajet optique, ou l'utilisation de plusieurs types d'objectifs ou de barrettes à un coût notablement inférieur à celui entraîné par les mêmes changements avec les dispositifs de l'art antérieur.

A cet effet, la présente invention a pour objet un dispositif optique d'analyse de documents tel que défini par la revendication.

Dans le dispositif de l'invention, le support des composants optiques comprend deux parties, d'une part le support du ou des miroirs réflecteurs, ou "porte-miroirs", et d'autre part le support de l'objectif et de la barrette, ou "porte-objectif". Chacun de ces deux éléments étant réalisé indépendamment de l'autre, il n'est pas nécessaire, lorsque l'on désire changer de type d'objectif ou de type de barrette photosensible, par exemple, de changer de porte-miroirs. De façon analogue, lorsque l'on désire changer de largeur d'analyse, il suffit de changer seulement le porte-miroirs. Il en résulte une importante économie dans les coûts de fabrication, car avec un jeu approprié de porte-miroirs et de porte-objectifs, on peut réaliser un grand nombre de combinaisons sans avoir à réaliser un grand nombre de moules. Le dispositif de l'invention est donc plus adaptable à des situations nouvelles que les dispositifs de l'art antérieur. Ce résultat remarquable a été atteint par la demanderesse car elle n'a pas craint de réaliser en deux parties le support réalisé jusqu'à présent en une seule partie pour des raisons de précision mécanique, en prévoyant de compenser l'imprécision qui en résulte dans le positionnement relatif entre les miroirs et l'objectif, par le réglage de la position relative de la barrette par rapport à l'objectif.

Avantageusement, lesdits premiers moyens supports sont en forme de T, lesdits moyens réflecteurs sont disposés parallèlement à la barre horizontale dudit T, et il est prévu, sur la partie desdits premiers moyens supports relative à la barre verticale dudit T, des moyens de montage desdits deuxièmes moyens supports dans une pluralité de positions s'étendant le long de ladite barre verticale.

Dans ce cas, il est possible, avec un même porte-miroirs et un même porte-objectif, de faire varier la longueur du chemin optique entre l'image à analyser et la barrette photosensible.

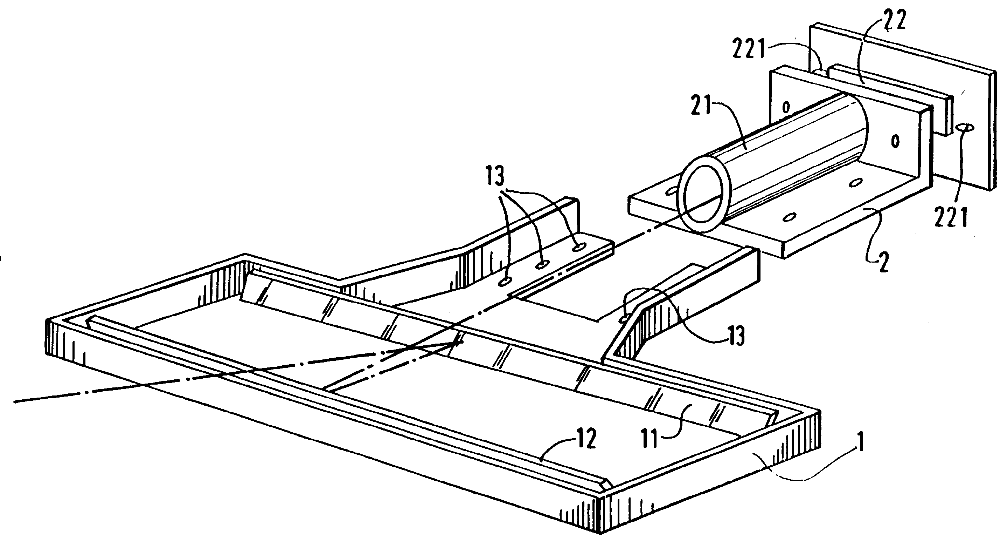

La présente invention sera mieux comprise à la lecture de la description suivante de la forme de réalisation préférée du dispositif de l'invention, faite en se référant aux dessins annexés, sur lesquels l'unique figure représente une vue en perspective éclatée d'un dispositif optique d'analyse de documents, ici destiné à être utilisé dans les télécopieurs.

Ce dispositif comprend principalement un porte-miroirs 1 et un porte-objectif 2.

Le porte-miroirs 1 est une pièce de fonderie ici en forme de T, et il supporte deux miroirs 11 et 12 se faisant face. Les miroirs 11 et 12 sont de forme allongée, et leur longueur est de l'ordre de grandeur de la largeur du document à analyser. Ils sont disposés parallèlement à la barre horizontale du T du porte-miroirs. Il est prévu, sur la partie relative à la barre verticale dudit T, des trous de fixation 13 qui permettent le montage d'un porte-objectif 2 dans une pluralité de positions s'étendant le long de ladite barre verticale.

Le porte-objectif 2 est également une pièce de fonderie, qui supporte un objectif 21 et une barrette 22 d'éléments photosensibles, ici des dispositifs connus de l'homme du métier sous le nom de dispositifs à charges couplées ou, selon la terminologie anglo-saxonne, "C.C.D.".

Il est prévu, de façon connue et symbolisée par les trous oblongs 221, un dispositif de réglage de la position de la barrette photosensible 22 sur le porte-objectif 2.

En fonctionnement normal, le porte-objectif 2 est fixé de façon connue, par exemple par des vis et boulons traversant les trous de fixation 13, sur le porte-miroirs 1 de façon à ce que l'ensemble forme un support rigide. Le document supportant l'image à analyser se déplace en face du miroir 11, qui réfléchit vers le miroir 12 le rayonnement lumineux en provenance de cette image. A son tour, le miroir 12 réfléchit ce rayonnement vers l'objectif 21, qui le focalise sur la barrette 22.

Néanmoins, comme le porte-objectif 2 est monté amovible sur le porte-miroirs 1, il est facilement démontable pour être déplacé, ou remplacé par un autre si un changement de type d'objectif ou de barrette est nécessaire. Si, du fait des imprécisions de positionnement relatif qui en résultent, l'objectif 21 n'est pas parfaitement calé par rapport aux miroirs 11 et 12, ceci peut être rattrapé en jouant sur le réglage de la barrette photosensible 22.

## Revendications

1. Dispositif optique d'analyse de documents comprenant:
- des moyens réflecteurs (11, 12) fixes, recevant un rayonnement lumineux en provenance d'un document à analyser entraîné en déplacement, supportés par des premiers moyens supports (1), et
- des moyens (21), de focalisation, sur des moyens photosensibles (22), du rayonnement lumineux réfléchi, supportés par des deuxièmes moyens supports (2),
lesdits deuxièmes moyens supports (2) étant fixés sur lesdits premiers moyens supports (1) en vue de leur déplacement, caractérisé par le fait que lesdits deuxièmes moyens supports (2) sont fixés sur lesdits premiers moyens supports (1) de façon amovible en vue de leur remplacement, lesdits premiers moyens supports sont en forme de T, lesdits moyens réflecteurs (11, 12) sont disposés parallèlement à la barre horizontale dudit T, il est prévu, sur la partie desdits premiers moyens supports (1) relative à la barre verticale dudit T, des moyens de montage (13) desdits deuxièmes moyens supports dans une pluralité de positions s'étendant le long de ladite barre verticale et il est prévu des moyens de réglage (221) de la position desdits moyens photosensibles (22) relativement auxdits deuxièmes moyens supports (2) pour rattraper un positionnement relatif imprécis desdits premiers (1) et deuxièmes (2) moyens supports.

## Patentansprüche

1. Optische Vorrichtung zur Analyse von Dokumenten, die umfaßt:
- feststehende Reflektormittel (11, 12), welche eine Lichtstrahlung empfangen, die von einem zu analysierenden Dokument stammt, das bewegt wird, und die von ersten Stützmitteln (1) getragen werden, und
- Fokussiermittel (21) zur Fokussierung der reflektierten Lichtstrahlung auf lichtempfindliche Mittel (22), die von zweiten Stützmitteln (2) getragen werden,
wobei diese zweiten Stützmittel (2) auf den ersten Stützmitteln (1) hinsichtlich ihrer Bewegung fixiert sind, dadurch gekennzeichnet, daß die zweiten Stützmittel (2) auf den ersten Stützmitteln (1) in abnehmbarer Weise befestigt sind, um ihren Austausch zu ermöglichen, die ersten Stützmittel (1) T-förmig sind, die Reflektormittel (11, 12) parallel zum horizontalen Balken dieses T angeordnet sind, auf dem Teil der ersten Stützmittel (1), der dem vertikalen Balken des T entspricht, Mittel (13) zur Montage der zweiten Stützmittel (2) in einer Vielzahl von sich längs des vertikalen Balkens erstreckenden Positionen vorgesehen sind und Mittel (221) zur Einstellung der Position der lichtempfindlichen Mittel (22) in bezug auf die zweiten Stützmittel (2) vorgesehen sind, um eine ungenaue relative Positionierung der ersten (1) und zweiten (2) Stützmittel nachzuregulieren.

## Claims

1. Optical device for the analysis of documents comprising:
- fixed reflector means (11, 12), receiving light rays coming from a document to be analysed which is driven into movement, which means are supported by first support means (1), and
- means (21) for focussing, on photo-sensitive means (22), the reflected light rays, which means (21) are supported by second support means (2),
said second support means (2) being fixed to said first support means (1) for the purpose of their movement, characterised
by the fact that the said second support means (2) are fixed to said first support means (1) in a detachable manner for the purpose of their replacement, the said first support means (1) are of T shape, said reflector means (11, 12) are disposed parallel to the horizontal bar of said T, there are provided, on the part of said first support means (1) relative to the vertical bar of said T, means (13) for mounting said second support means (2) in a plurality of positions extending along said vertical bar and means (221) are provided for adjusting the position of said photo-sensitive means (22) relative to said second support means (2) in order to take up a relative inaccurate positioning of said first support means (1) and second support means (2).
